# EUROPEAN PATENT APPLICATION

(11) **EP 4 821 824 A1**
(43) Date of publication of application: **14.10.2026**
(21) Application number: 26153653.6
(22) Date of filing: 23.01.2026
(51) Int. Cl.: B64D 31/02, B64D 45/00, F02C 7/26

(54) **SYSTEMS AND METHODS TO DETERMINE ENGINE OPERATION DURING TAXIING OF A MULTI-ENGINE AIRCRAFT**

(30) Priority: 07.04.2025 US 202519171675
(71) Applicant: The Boeing Company, Arlington, VA 22202 (US)
(72) Inventor: MASARU NARASIMHULU, Veeresh Kumar, Arlington, 22202 (US); SELVARAJ, Austrine Sumy, Arlington, 22202 (US); KOENNEN, Joost Edwin, Arlington, 22202 (US)
(74) Representative: Morrall, Jonathan Ian McLachlan

(57) **Abstract**

Systems and methods of determining taxiing of an aircraft (20) with multiple engines (30). The systems can include a database (52) operational to store collected historical data (61) about conditions that affect one or more engine characteristics with the one or more engine characteristics comprising fuel usage, engine wear, noise, emissions, and effect on related aircraft systems. A computing device (51) is in communication with the database and is operational to: train a machine learning model (53) using the historical data; determine an expected outcome of the engine characteristics for each of the engines; and determine which of the one or more engines to not use during taxiing of the aircraft.

## Description

### TECHNOLOGICAL FIELD

The present application is directed to taxiing of an aircraft and, more particularly, to systems and methods of evaluating the engines of an aircraft and determining which of the one or more engines to not use during taxiing.

### BACKGROUND

Many aircraft include multiple engines. The engines can be positioned at various locations along the aircraft, including along the wings, fuselage, and tail section. The engines generate thrust which propels the aircraft during flight. The engines also provide thrust for propelling the aircraft while taxiing on the ground. The taxiing occurs prior to the flight to move the aircraft from a terminal to a runaway, and also after a flight to move the aircraft from the runway to the terminal.

The flight personnel on the aircraft determine how to operate the engines during taxiing. The manner of operation affects one or more characteristics including but not limited to fuel usage, engine wear, the operation of other systems on the aircraft, engine emissions, and overall noise produced by the aircraft during taxiing. The flight personnel can operate the engines in various manners during taxiing. In some examples, the flight personnel rely on a default mode that is used during every taxiing event. For example, some flight personnel use all of the engines during taxiing to propel the aircraft. In other examples, the flight personnel operate the engines based on their experience or on an arbitrary reason. For example, flight personnel always use just one of the engines on during taxiing (e.g., the starboard engine).

The current systems and methods do not rely on engine analytics to determine engine operation during taxiing. This can result in the engines being operated in an inefficient manner that does not optimize one or more of the engine characteristics. Thus, there is a need to analyze the engines to determine how to operate the engines during taxiing.

### SUMMARY

One aspect is directed to a method of taxiing an aircraft with multiple engines. The method comprises: collecting historical data on conditions that affect one or more engine characteristics of the engines during taxiing of the aircraft; determining current conditions that affect the one or more engine characteristics during taxiing of the aircraft; generating, for each of the engines and based on the historical data and the current conditions, an expected outcome of the one or more engine characteristics; and determining one or more of the engines to not use and taxiing with a limited number of the engines based on the expected outcome of the one or more engine characteristics of the engines.

In another aspect, the one or more engine characteristics comprise fuel usage, engine wear, noise, emissions, and an effect on related aircraft systems.

In another aspect, the method further comprises operating one of the engines of the aircraft during taxiing and shutting down a remainder of the engines during taxiing.

In another aspect, the method further comprises: training a machine learning model using the historical data; and generating, with the machine learning model and the current conditions, the expected outcome of the one or more engine characteristics for each for the engines.

In another aspect, the method further comprises receiving the current conditions from one or more sensors mounted on the aircraft.

In another aspect, the method further comprises: collecting the historical data from a manufacturer of the engines with the historical data comprising theoretical values; and generating for each of the engines the expected outcome of the one or more engine characteristics based on the theoretical values.

In another aspect, the historical data comprises weather conditions at an airport where the aircraft is taxiing, and the current conditions comprise current weather conditions at the airport.

In another aspect, the historical data comprises data just from times when the aircraft is taxiing.

One aspect is directed to a method of taxiing an aircraft with multiple engines. The method comprises: storing for each of the engines historical data that affect engine characteristics of the engine with the engine characteristics comprising one or more of fuel usage, engine wear, noise, emissions, and an effect of related aircraft systems; training a computer machine learning model using the historical data; determining current data of conditions that affect the engine characteristics of the engines; determining, based on the machine learning model and the current conditions, which of the one or more engines to not use for taxiing; and taxiing the aircraft using a limited number of the engines.

In another aspect, the method further comprises: generating, based on the machine learning model and the current conditions, an expected outcome of the engine characteristics of each of the engines; and determining which of the one or more engines to not use based on the expected outcome of the engine characteristics of each of the engines.

In another aspect, the method further comprises propelling the aircraft with the engine with a highest expected outcome of engine characteristics and not using the one or more other engines with lower expected outcome of engine characteristics.

In another aspect, the method further comprises signaling to a flight deck of the aircraft which of the one or more engines to shut down.

In another aspect, the method further comprises collecting the historical data about each of the engines and storing the historical data in a database.

In another aspect, the method further comprises collecting the historical data from manufacturer data about the engines, the manufacturer data being theoretical data based on engineered aspects of the engines.

In another aspect, the method further comprises collecting the historical data from engines on other aircraft that share one or more characteristics with the engines.

In another aspect, the historical data comprises weather conditions at an airport where the aircraft is taxiing and the current data comprises current weather conditions at the airport.

In another aspect, the method further comprises factoring in each of the engine characteristics and determining which of the one or more engines to not use.

One aspect is directed to a system of determining taxiing of an aircraft with multiple engines. The system comprises a database operational to store collected historical data about conditions that affect one or more engine characteristics with the one or more engine characteristics comprising fuel usage, engine wear, noise, emissions, and effect on related aircraft systems. A computing device is in communication with the database and is operational to: train a machine learning model using the historical data; determine an expected outcome of the engine characteristics for each of the engines; and determine which of the one or more engines to not use during taxiing of the aircraft.

In another aspect, the historical data comprising one or more of: a manufacturer of each of the engines; a model of each of the engines; an installation date that each of the engines was installed on the aircraft; a maintenance history of each of the engines; fuel consumption of each of the engines; and emissions of each of the engines.

In another aspect, the computing device is integrated within an aircraft.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft.
Figure 2 is a schematic diagram of an airport that includes taxiways that extend between a terminal and runways.
Figure 3 is a schematic diagram of data that includes historical data and current conditions that is used to determine which one or more engines to shut down during taxiing of an aircraft.
Figure 4 is a flowchart diagram of a method of taxiing an aircraft that includes multiple engines.
Figure 5 is a schematic diagram of a computing system configured to receive data from one or more sources.
Figure 6 is a flowchart diagram of a method of taxiing an aircraft that includes multiple engines.
Figure 7 is a schematic diagram of a computing device.

### DETAILED DESCRIPTION

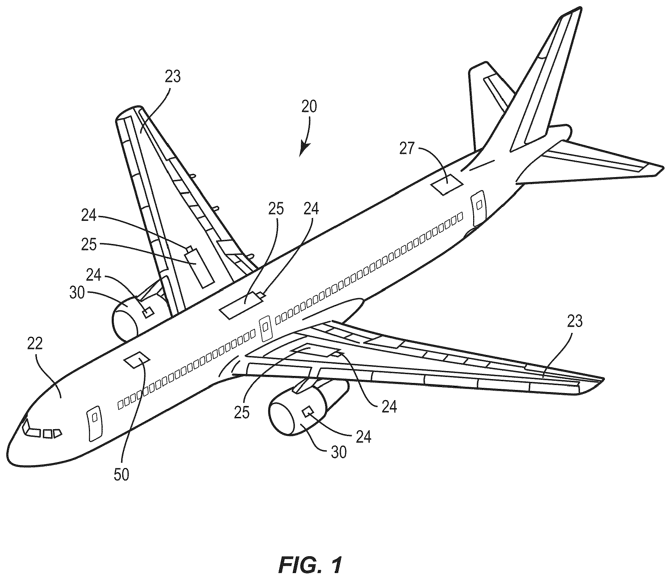

Figure 1 illustrates an example of an aircraft 20 that includes a fuselage 21 configured to transport people and/or cargo. A flight deck 22 is positioned at the front of the fuselage 21 and includes controls to operate the aircraft 20. Wings 23 extend outward from the fuselage 21 with engines 30 mounted on the undersides. The example of Figure 1 includes an aircraft 20 with two engines 30 that are mounted on the wings 23 on opposing sides of the fuselage 21. Other examples include more than two engines 30. Other examples include engines 30 mounted at various locations on the aircraft 20. Various types of engines 30 can be used with the aircraft 20 with examples including but are not limited to turbofan engines, turbojet engines, and turboprop engines.

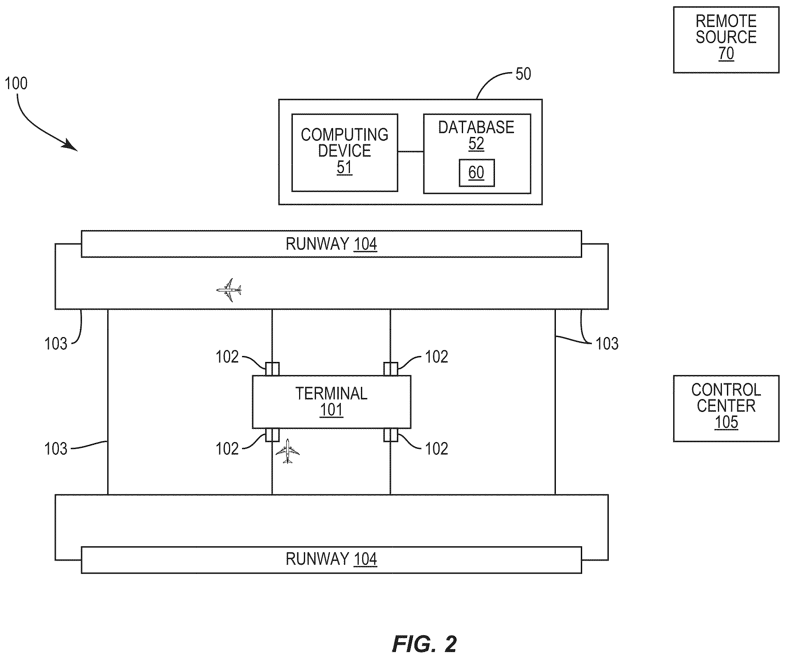

The engines 30 propel the aircraft 20 during flight and also when taxiing on the ground. Figure 2 illustrates an example of airport 100 that includes a terminal 101 that accommodates passengers and/or houses cargo that are transported by the aircraft 20. The terminal 101 includes one or more gates 102 where the aircraft 20 are positioned during loading and unloading of the passengers/cargo. Taxiways 103 extend between the gates 102 and runways 104. The taxiways 103 include various sections and turns to enable the aircraft 20 to move between the gates 102 and runways 104.

A computing system 50 monitors the operation of the engines 30 of the aircraft 20. The computing system 50 includes a computing device 51 and database 52. The computing device 51 is configured to determine which of the one or more engines 30 to shut down during taxiing. The database 52 stores collected data 60 about the engines 30 which is used to determine the shutdown. In some examples, the database 52 is integrated with the computing device 51. In other examples, these components are physically separated. The computing device 51 and database 52 can be located at various positions including but not limited to on the aircraft 20, at the airport 100 (e.g., at a control center 105 or terminal 101), and at a remote location away from the aircraft 20 and airport 100 (e.g., remote server that monitors engine use for an airline). Figure 2 illustrates an example with the computing system 50 including one computing device 51 and one database 52. In other examples, the computing system 50 includes two or more computing devices 51 and/or databases 52.

Data 60 is collected and used to determine one or more the engine characteristics that occur during taxiing of the aircraft 20. The engine characteristics include but are not limited to fuel usage, engine wear, noise, engine emissions, and the effect of shutting down an engine 30 on other systems on the aircraft 20. The data 60 is collected from a variety of different sources. One source is from the aircraft 20, such as but not limited sensor readings and data that is input from flight personnel. Another source is from the airport 100 such as but not limited to sensors that detect the weather and input from persons at the control center 105. Various remote sources 70 can also provide data including an original equipment manufacturer (OEM) of an engine 30 that provides baseline data regarding one or more of the engine characteristics. In some examples, the OEM data is theoretical data based on engineered aspects of the engine 30. Other examples of remote sources 70 include a weather source (e.g., National Weather Service) that provides weather conditions for the airport 100, and an airline that operates the aircraft 20 and provides maintenance history, fuel usage, and other data about aircraft operation.

The collected data 60 is specific for each of the engines 30. For example, an aircraft 20 with three engines 30 has corresponding data 60 for each engine 30. Based on the collected data 60, the computing device 51 determines one or more of the engines 30 of an aircraft 20 that are to be shut down during taxiing. The data is supplied to flight personnel who are able to shut down the engines 30. This provides various advantages including decreasing fuel consumption, decreasing engine wear, maintaining one or more aircraft systems operational during taxiing, reducing emissions, and reducing noise that is produced by the aircraft 20.

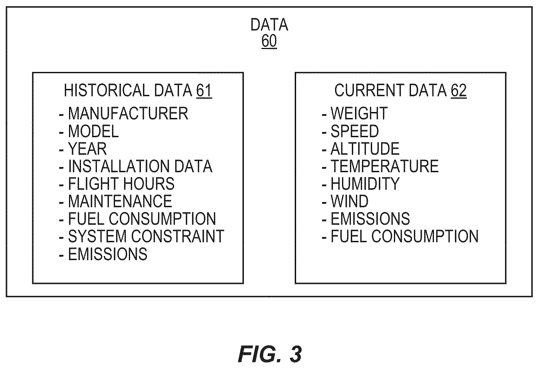

As schematically illustrated in Figure 3, the data 60 includes historical data 61 and current data 62. Historical data 61 includes aspects about the construction of the engine 30 including but not limited to the manufacturer, model number, and year built. Historical data 61 also includes the installation date when the engine 30 was installed on the aircraft 20. The engine 30 can be original with the aircraft 20 or could have been installed at some point during the life of the aircraft 20. Historical data 61 also includes the overall flight hours, and maintenance history of the engine 30.

Historical data 60 includes fuel consumption aspects. Fuel consumption is determined in various manners including being based on readings from sensors 24 on the aircraft 20. The sensors 24 can be mounted as various positions, including but not limited at the engines 30, along the fuel lines, and at the fuel tanks 25. The fuel consumption can include the fuel usage during previous taxiing of the aircraft 20. The fuel consumption can also include the overall fuel consumption of the engine 30 that includes both taxiing and flight operations. In some examples, the fuel consumption data includes expected fuel consumption supplied by the OEM.

Historical data 61 includes system constraints that are caused to other systems that are onboard the aircraft that are powered by the engine 30. The operation of the engine 30 affects the operation of the corresponding system. Examples of systems include an air management system, environmental control system, and lighting system. In some examples, shutting down an engine 30 results in the shut down of the associated system. In other examples, when an engine 30 that supplies power to an associated system is shut down, the power for the associated system is obtained from another source, such as from an auxiliary power unit (APU) 27.

Historical data 61 includes the emissions from the engine 30. This can be based on various inputs, such as sensor readings on the aircraft 20 and data from the OEM.

In some examples, the historical data 61 is accumulated during all operation of the engine 30. Additionally or alternatively, the historical data 61 is collected just at predetermined times, such as when the engine 30 is operational during taxiing. For example, fuel consumption data includes sensors readings taken just when the aircraft 20 is taxiing. In a specific example, fuel consumption data is taken just during taxiing at a substantially constant speed. In some examples, using historical data collected just during certain occurrences (e.g., just during taxiing) is more accurate than using historical data from all engine operations. Further, this can prevent inaccurate sensor readings such as data collected during engine start, engine shut down, and acceleration or deceleration during taxiing which have been determined to be less accurate.

The data 60 also includes the current data 62. Current data 62 are conditions that are currently being experienced by the aircraft 20. Examples include the gross weight of the cargo/passengers, current taxi speed of the aircraft 20 along the taxiway 103, and the altitude of the airport 100. Current data 62 includes weather aspects such as temperature, humidity, wind direction, and wind speed. Current data includes the operation of the engine 30 such as the fuel consumption and emissions.

The amounts and type of historical data 61 and current data 62 can vary. In some examples, data 60 has been collected and/or is available for each of the various aspects. In other examples, no data is available for one or more of the aspects. The computing system 50 uses the available data 60 to determine which of the one or more engines 30 to shut down during taxiing.

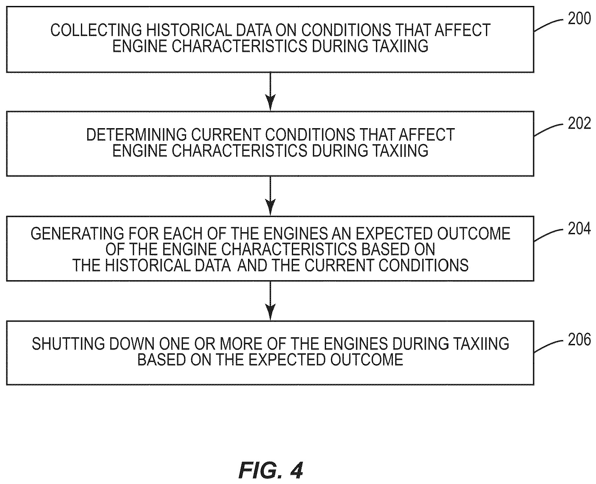

Figure 4 illustrates a method of taxiing an aircraft 20 with multiple engines 30. The method includes collecting historical data 61 on conditions that affect the engine characteristics during taxiing of the aircraft 20 (block 200). Further, current conditions 62 are determined that affect the engine characteristics during taxiing (block 202). For each of the engines 30 an expected outcome of the engine characteristics is generated based on the historical data 61 and the current conditions 62 (block 204). One or more of the engines 30 are shut down during taxiing based on the expected outcome of the engine characteristics of each of the engines 30 (block 206).

The historical data 61 provides an indication of the effect of shutting down the engine 30 on the engine characteristics. This information is then used to determine the effect of shutting down the engine 30 in the current conditions. For example, the historical data 61 includes the amount of fuel consumption for a particular model engine with a usage history and weather conditions. The current conditions of the engine 30 are compared to the historical data 61 to provide an expected outcome for the engine relative to the one or more engine characteristics. In some examples, the accuracy of the expected outcome is dependent upon the amount of correlation between the current data 62 and the historical data 61.

In some examples, the expected outcome of each engine 30 is calculated as a score. The score is a combination of the effect of shutting down the engine 30 on the engine characteristics. For example, shutting down a first engine has score components for fuel consumption, noise, emissions, and related aircraft systems. Shutting down a second engine has different score components for these same engine characteristics. The different components are summed for each engine 30 to determine an overall score. One or more of the engines 30 are shut down based on a comparison of the scores.

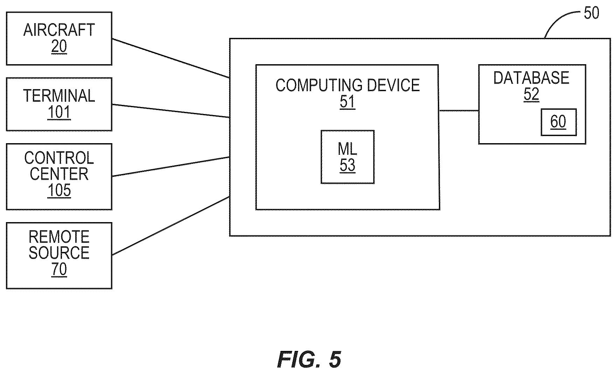

Figure 5 illustrates an example of a computing system 50 that includes a computing device 51 and associated database 52. The computing system 50 is configured to communicate with the various data sources to determine the current conditions 62 including the aircraft 20, terminal 101, control center 105, and remote sources 70. In some examples, the computing system 50 is configured to monitor a single aircraft 20, such as but not limited to when the computing system 50 is integrated with the aircraft 20. In other examples, the computing system 50 is configured to monitor multiple aircraft 20 and is in communication with various numbers of different aircraft 20.

The computing device 51 includes a machine learning (ML) model 53. The computing device 51 is configured to train the machine learning model 53 using the historical data 61 (e.g., training data). This training enables the machine learning model 53 to then apply the current data 62 to determine which of the one or more engines 30 to shut down for an aircraft 20 that is currently taxiing or will be taxiing in the near future.

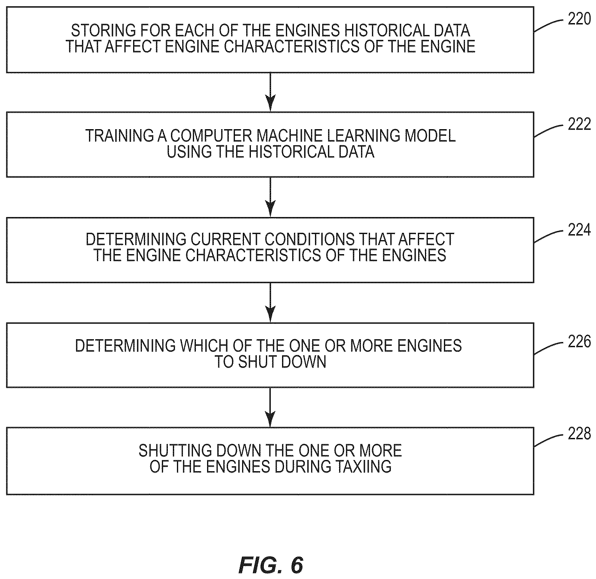

Figure 6 illustrates a method of taxiing an aircraft 20 with multiple engines 30. The method includes storing for each of the engines 30 historical data 61 that affect engine characteristics of the engine (block 220). The historical data 61 is then used to train a computer machine learning model 53 (block 222). The current conditions 62 are determined that affect the engine characteristics of the engines 30 (block 224). The trained machine learning model 53 uses the current conditions 62 to determine which of the one or more engines 30 to shut down (block 226). The determination then results in shutting down the applicable one or more engines 30 during taxiing (block 228).

In some examples, the machine learning model 53 determines an expected outcome for each of the engines 30. The expected outcome is the expected effect on the engine characteristics if the engine 30 was shut down during taxiing. The expected outcomes for the different engines 30 are determined and compared to determine which engines 30 to shut down during taxiing.

In the various examples, the number of engines 30 that remain on to provide thrust to propel the aircraft 20 during taxiing can vary. In some examples, a single engine 30 remains on. In other examples, two or more engines 30 remain on.

In some examples, the results of the determination are signaled to the flight personnel on the aircraft 20. The flight personnel then shut down the one or more engines 30 during the taxiing.

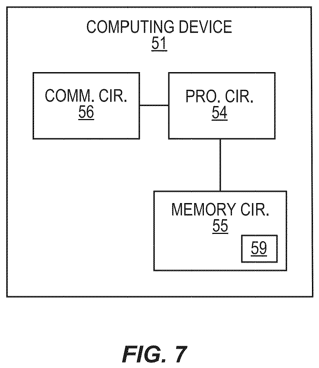

Figure 7 illustrates a computing device 51 that determines the one or more engines 30 to shut down during taxiing of the aircraft 20. In some examples, the computing device 51 is a stand-alone component. In some examples, the computing device 51 is incorporated into one or more other computing devices 51. In some examples in which the computing device 51 is on the aircraft 20, the computing device is integrated into one or more other computing devices such as but not limited to a fuel control computing device and a flight control computing device.

The computing device 51 can include one or more of each of a number of components such as, for example, processing circuitry 54 (e.g., processor unit) connected to a memory circuitry 55 (e.g., storage device). The processing circuitry 54 may be composed of one or more processors alone or in combination with one or more memories. The processing circuitry 54 is generally computer hardware that is capable of processing information such as, for example, data, computer programs and/or other suitable electronic information. The processing circuitry 54 is composed of a collection of electronic circuits some of which may be packaged as an integrated circuit or multiple interconnected integrated circuits (an integrated circuit at times more commonly referred to as a "chip"). The processing circuitry 54 may be configured to execute computer programs 59 with programming instructions which may be stored onboard the processing circuitry 54 or otherwise stored in the memory circuitry 55 (of the same or another device).

The processing circuitry 54 may be a number of processors, a multi-core processor or some other type of processor, depending on the particular implementation. Further, the processing circuitry 54 may be implemented using a number of heterogeneous processor systems in which a main processor is present with one or more secondary processors on a single chip. As another illustrative example, the processing circuitry 54 may be a symmetric multi-processor system containing multiple processors of the same type. In yet another example, the processing circuitry 54 may be embodied as or otherwise include one or more ASICs, FPGAs or the like. Thus, although the processing circuitry 54 may be capable of executing a computer program to perform one or more functions, the processing circuitry 54 of various examples may be capable of performing one or more functions without the aid of a computer program. In either instance, the processing circuitry 54 may be appropriately programmed to perform functions or operations according to example implementations of the present disclosure.

The memory circuitry 55 is generally computer hardware that is capable of storing information such as, for example, data, computer programs (e.g., computer-readable program code) and/or other suitable information either on a temporary basis and/or a permanent basis. The memory circuitry 55 may include volatile and/or non-volatile memory and may be fixed or removable. Examples of suitable memory circuitry 55 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory circuitry 55 may be referred to as a computer-readable storage medium. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

In some examples, the memory circuitry 55 is configured to store one or more of the historical data 61, the current conditions 62, and the machine learning model 63. In some examples, the historical data 61 and machine learning model 63 are stored remotely to reduce processing requirements for training the machine learning model 63.

Computing device 51 also includes communications circuitry 56 configured to transmit and/or receive information, such as to and/or from the various data sources (e.g., airport, remote nodes) as well as sensors 24 mounted on the aircraft 20. The communications circuitry 56 may be configured to transmit and/or receive information by physical (wired) and/or wireless communications links. Examples of suitable communication interfaces include a network interface controller (NIC), wireless NIC (WNIC) or the like. The communications circuitry 56 may have one or more transmitters and/or receivers. In some examples, a user interface is included to enable input from the flight personnel and other persons monitoring the aircraft 20. The user interface can include one or more input devices such as but not limited to a keypad, touchpad, roller ball, and joystick. The user interface also includes one or more displays for displaying information regarding the fuel jettison.

As will be appreciated by those of ordinary skill in the art without undue experimentation, program code instructions 59 may be loaded onto a computing device 51 or other programmable apparatus from a computer-readable storage medium to produce a particular machine, such that the particular machine becomes a means for implementing the functions specified herein. These program code instructions 59 may also be stored in a computer-readable storage medium that can direct a computer, a processing circuitry or other programmable apparatus to function in a particular manner to thereby generate a particular machine or particular article of manufacture. The program code instructions 59 may be retrieved from a computer-readable storage medium and loaded into a computer, processing circuitry or other programmable apparatus to configure the computing device 51, processing circuitry 54 or other programmable apparatus to execute operations to be performed on or by the computer, processing circuitry or other programmable apparatus.

In some examples, the data 60 is stored at a database 52 that is separate from the computing device 51. In other examples, the data 60 is stored in the memory circuitry 55 of the computing device 51. In still other examples, a portion of the data 60 is stored in each of the database 52 and the memory circuitry 55.

The systems and methods provide for using a limited number of engines 30 during taxiing. In some examples, this includes shutting down one or more of the engines 30 during taxiing. For example, after landing on the runway 104 with each of the engines 30 in operation, one or more of the engines 30 is shut down for taxiing. In another example, the engines 30 are prepared for flight by starting and operating in preparation for a flight (e.g., such as after pull-back from the gate 102). After this initial preparation, one or more of the engines 30 are shut down for taxiing. Once taxiing is completed, the one or more engines 30 are started and each of the engines 30 on the aircraft 20 are made operational for flight. In other examples, one or more of the engines 30 are not started until after taxiing, such as when taxiing from the gate 102 to the runway prior to flight. Once taxiing is complete, the one or more engines 30 are started and each of the engines 30 on the aircraft 20 is prepared for flight.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of taxiing an aircraft (20) with multiple engines (30), the method comprising:
collecting historical data (61) on conditions that affect one or more engine characteristics of the engines 30 during taxiing of the aircraft (20);
determining current conditions (62) that affect the one or more engine characteristics during taxiing of the aircraft (20);
generating, for each of the engines (30) and based on the historical data (61) and the current conditions (62), an expected outcome of the one or more engine characteristics; and
determining one or more of the engines (30) to not use and taxiing with a limited number of the engines (30) based on the expected outcome of the one or more engine characteristics of the engines (30).

2. The method of claim 1, wherein the one or more engine characteristics comprise fuel usage, engine wear, noise, emissions, and an effect on related aircraft systems.

3. The method of claim 1 or 2, further comprising operating one of the engines (30) of the aircraft (20) during taxiing and shutting down a remainder of the engines (30) during taxiing.

4. The method of any preceding claim, further comprising:
training a machine learning model (53) using the historical data (61); and
generating, with the machine learning model (53) and the current conditions (62), the expected outcome of the one or more engine characteristics for each for the engines (30).

5. The method of any preceding claim, further comprising receiving the current conditions (62) from one or more sensors (24) mounted on the aircraft (20).

6. The method of any preceding claim, further comprising:
collecting the historical data (61) from a manufacturer of the engines (30) with the historical data (61) comprising theoretical values; and
generating for each of the engines (30) the expected outcome of the one or more engine characteristics based on the theoretical values.

7. The method of any preceding claim, wherein the historical data (61) comprises weather conditions at an airport (100) where the aircraft (20) is taxiing, and the current conditions (62) comprise current weather conditions at the airport (100).

8. The method of any preceding claim, wherein the historical data (61) comprises data just from times when the aircraft (20) is taxiing.

9. The method of any of claims 3 to 8, further comprising signaling to a flight deck of the aircraft which of the one or more engines to shut down.

10. The method of any preceding claim further comprising collecting the historical data from engines on other aircraft that share one or more characteristics with the engines.

11. The method of any preceding claim, further comprising factoring in each of the engine characteristics and determining which of the one or more engines to not use

12. The method of any preceding claim, further comprising propelling the aircraft with the engine with a highest expected outcome of engine characteristics and not using the one or more other engines with lower expected outcome of engine characteristics.

13. A system of determining taxiing of an aircraft (20) with multiple engines (30), the system comprising:
a database (52) operational to store collected historical data (61) about conditions that affect one or more engine characteristics, the one or more engine characteristics comprising fuel usage, engine wear, noise, emissions, and effect on related aircraft systems;
a computing device (51) in communication with the database (52) and operational to:
train a machine learning model (53) using the historical data (61);
determine an expected outcome of the engine characteristics for each of the engines (30); and
determine which of the one or more engines (30) to not use for taxiing the aircraft (20).

14. The system of claim 13, wherein the historical data (61) comprising one or more of:
a manufacturer of each of the engines (30);
a model of each of the engines (30);
an installation date that each of the engines (30) was installed on the aircraft (20);
a maintenance history of each of the engines (30);
fuel consumption of each of the engines (30); and
emissions of each of the engines (30).

15. The system of claim 13 or 14, wherein the computing device (51) is integrated within an aircraft (20).
